(19) Europäisches Patentamt / European Patent Office / Office européen des brevets

(11) **EP 2 761 366 B1**

(12) **FASCICULE DE BREVET EUROPEEN**

(45) Date de publication et mention
de la délivrance du brevet:
**21.08.2019 Bulletin 2019/34**

(21) Numéro de dépôt: **12773052.1**

(22) Date de dépôt: **18.09.2012**

(51) Int Cl.:
*G02C 13/00* *(2006.01)*      *H04N 5/232* *(2006.01)*

(86) Numéro de dépôt international:
**PCT/FR2012/052081**

(87) Numéro de publication internationale:
**WO 2013/045789 (04.04.2013 Gazette 2013/14)**

(54) **PROCEDE DE MESURES DE PARAMETRES MORPHO-GEOMETRIQUES D'UN INDIVIDU PORTEUR DE LUNETTES**

MESS-VERFAHREN ZUR BESTIMMUNG MORPHO-GEOMETRISCHEN PARAMETER EINES BRILLEN-TRÄGER

MEASUREMENT PROCESS OF MORPHO-GEOMETRIC PARAMETERS OF A SPECTACLES WEARER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2011 FR 1158664**

(43) Date de publication de la demande:
**06.08.2014 Bulletin 2014/32**

(73) Titulaire: **Essilor International**
**94220 Charenton-le-Pont (FR)**

(72) Inventeurs:
• **DIVO, Fabien**
**F-94220 Charenton Le Pont (FR)**

• **HASBROUCQ, Gaétan**
**F-94220 Charenton Le Pont (FR)**

(74) Mandataire: **Allain, Laurent et al**
**Ipsilon**
**Le Centralis**
**63, avenue du Général Leclerc**
**92340 Bourg-la-Reine (FR)**

(56) Documents cités:
**EP-A2- 1 038 495          WO-A1-99/03278**
**WO-A1-2008/129168     WO-A2-2008/153728**
**US-A1- 2008 309 772**

**Description**

Le domaine technique de l'invention concerne les procédés de mesures de paramètres morpho-géométriques d'un individu porteur de lunettes. Ces paramètres peuvent, par exemple, inclure la distance pupillaire PD, la hauteur H séparant la pupille du bord inférieur d'un verre, l'angle pantoscopique $\Theta$P qui est l'angle d'inclinaison des verres par rapport au plan facial de l'individu, la distance DVO entre l'oeil et le verre V ainsi que le centre de rotation CRO de l'oeil. La connaissance de ces paramètres est indispensable pour bien personnaliser une paire de lunettes, et en particulier des verres progressifs.

Il existe déjà des procédés permettant d'effectuer des mesures d'un certain nombre de ces paramètres morpho-géométriques. Une première catégorie de ces procédés met en oeuvre une colonne de mesures verticale et de grande taille, avec le réglage d'une caméra à hauteur des yeux, l'individu porteur de lunettes se regardant dans un miroir. Ce type d'appareillage est très encombrant et nécessite donc un local de grande dimension pour réaliser les mesures, et il est peu souple d'utilisation dans la mesures où il ne peut pas être déplacé facilement pour affiner les mesures, ni être dissocié en plusieurs éléments pour s'adapter à un environnement ou à une situation donnée.

Une deuxième catégorie de procédés, qui est par exemple décrite dans le brevet US2010195045, implique une tablette de mesures apte à mesurer les hauteurs et l'angle pantoscopique, en tenant compte de l'inclinaison de la tablette pour corriger les valeurs desdites hauteurs et dudit angle pantoscopique. Cependant, de tels procédés ne donnent pas des valeurs de hauteurs et d'angle pantoscopique très précises, si l'angle d'inclinaison de la tablette est trop élevé. En effet, ils ne donnent pleinement satisfaction que pour des angles d'inclinaison de la tablette très faibles, limitant grandement les configurations possibles de mesures, et impactant donc sur la souplesse d'utilisation de cette tablette. Les procédés impliquant une tablette au fonctionnement limité sont rendus peu ergonomiques.

Les procédés de mesures de paramètres morpho-géométriques selon l'invention mettent en oeuvre un appareillage souple d'utilisation, pouvant facilement et rapidement effectuer des mesures précises et fiables desdits paramètres, tout en évitant à l'individu porteur de lunettes de subir la moindre contrainte. En effet, durant tout le procédé, l'individu adopte une posture confortable, avec un port de tête naturel, sans jamais avoir à subir un protocole de mesures nécessitant l'adoption de postures contraignantes et répétitives, et sans jamais avoir à porter un équipement complémentaire nécessaire à la prise de mesures. Les procédés selon l'invention sont également conçus pour restituer automatiquement et rapidement le résultat des mesures. Ils sont donc fiables, précis et rapides, tout en demeurant souples d'utilisation et ergonomiques.

Les documents WO2008/129168 A1 et US2008/309772 A1 couvrent aussi des procédés de mesures de paramètres morpho-géométriques.

Pour la suite de la description, les termes « lunettes », « paire de lunettes » ou « monture » sont équivalents.

L'invention telle que définie dans les revendications a pour objet un procédé de mesures d'au moins un paramètre morpho-géométrique d'un individu portant des lunettes, ledit procédé mettant en oeuvre un dispositif informatique autonome comprenant un écran, une cible, un système d'acquisition d'images compact doté d'un moyen de détermination de son inclinaison et relié audit écran, et un calculateur permettant de piloter le système d'acquisition d'images et de traiter les images obtenues. La principale caractéristique d'un procédé de mesures selon l'invention, est qu'il comprend les étapes suivantes,

- Réglage de l'inclinaison du système d'acquisition d'images pour demeurer dans une plage angulaire admissible, ledit système d'acquisition d'images étant doté d'un dispositif de compensation de son inclinaison, de manière à obtenir une image des yeux de l'individu toujours centrée sur l'écran, quelle que soit l'inclinaison dudit système dans la plage angulaire admissible.

- Réglage de la hauteur du système d'acquisition d'images pour que l'individu puisse visualiser la cible selon un axe de vision sensiblement horizontal,
Observation par l'individu de la cible, dans une position de confort n'impliquant aucune contrainte de positionnement, les lunettes occupant une position naturelle sur le visage de l'individu,

- Acquisition d'au moins une image des yeux et de la monture dans ladite position d'observation au moyen du système d'acquisition d'images,

- Traitement de ladite au moins une image par le calculateur pour déterminer chaque paramètre morpho-géométrique de l'individu, à partir de la position des pupilles et de l'inclinaison de ses lunettes.

- Restitution du résultat des mesures.

Le principe d'un procédé de mesures selon l'invention, est d'effectuer un réglage aussi précis que possible du système d'acquisition d'images, afin de permettre à l'individu porteur de lunettes de pouvoir évoluer confortablement et sans contrainte devant ledit système d'acquisition d'images, lors du déroulement dudit procédé. Le système d'acquisition d'images peut comprendre au moins un appareil photo ou au moins une caméra. L'inclinaison de l'axe du système d'acquisition d'image doit être connue avec précision pour notamment corriger les erreurs de parallaxe due à cette inclinaison et qui pourraient fausser les mesures. Le terme « compact » attribué au système d'acquisition d'image signifie que ledit système est de petite dimension, et qu'il peut être manipulé facilement pour être posé sur un meuble usuel de type table ou bureau, et/ou pour être incliné. La cible est préférentiellement portée par le système d'acquisition d'images afin de simplifier l'équipement mis en oeuvre pour la réalisation du procédé de mesures selon l'invention. De façon avantageuse, la cible est positionnée sensiblement à la même hauteur que le système d'acquisition d'images, et doit constituer un point identifiable, que l'individu peut fixer facilement avec ses lunettes, même sans sa correction habituelle. Elle peut être matérialisée par un motif spécifique ajouté, présentant une forme, une couleur et/ou un relief visible, mais elle peut également être représentée par un élément constitutif du système d'acquisition d'images et ayant une fonction bien spécifique, comme un flash ou l'optique d'une caméra et ou d'un appareil photo. Les images prises par le système d'acquisition, doivent représenter principalement la monture des lunettes positionnée par rapport aux yeux de l'individu. En effet, toutes les informations nécessaires au traitement informatique des images pour obtenir les paramètres recherchés, doivent clairement apparaitre sur lesdites images, à travers la position dans l'espace de ladite monture par rapport aux yeux de l'individu. Il est donc fondamental que sur les images apparaissent clairement et précisément, à la fois la monture et les yeux de l'individu. Les paramètres morpho-géométriques se déduisent alors aisément desdits clichés à partir de relations trigonométriques usuelles. L'inclinaison du système d'acquisition d'images doit être limitée à une plage angulaire admissible, sous peine de biaiser les mesures en introduisant des écarts angulaires trop importants. Il est supposé que ledit système d'acquisition d'images est préprogrammé pour fonctionner dans cette plage angulaire admissible, et qu'en dehors de cette plage, il ne peut plus acquérir d'images. De cette manière, la personne manipulant le système d'acquisition d'images, n'a plus à se soucier de son inclinaison. La monture peut éventuellement être dotée d'un moyen de repérage sous la forme d'un clip muni de marqueurs, afin de permettre une visualisation précise de son orientation dans l'espace sur une image, et de son inclinaison. L'écran a pour fonction principale de permettre une visualisation des images prises par le système d'acquisition. Il peut également servir à restituer le résultat des mesures des paramètres morpho-géométriques recherchés. Le procédé peut être piloté, soit par l'individu porteur de lunettes lui-même, soit par un opérateur pouvant être un opticien. Il est supposé que l'écran possède une zone centrale apparente, dans laquelle doit s'inscrire l'image acquise, afin que celle-ci soit pleinement exploitable. Cette compensation active de l'inclinaison, qui permet de faire figurer en temps réel les yeux et la monture dans la zone centrale de l'écran prévue à cet effet, permet une inclinaison du système d'acquisition d'images de grande amplitude dans la plage angulaire admissible, car cette compensation élimine les risques de voir l'image sortir entièrement ou partiellement de l'écran de visualisation. Le dispositif de compensation se fonde sur un logiciel de traitement d'image, qui sélectionne sur l'image obtenue par le système d'acquisition et sur laquelle apparait de façon excentrée le visage de l'individu, la zone relative aux yeux et à la monture de l'individu, et qui déplace ladite zone au centre dudit écran.

De façon préférentielle, la compensation consiste à déplacer vers le centre de l'écran chaque image obtenue par le système d'acquisition, le sens et l'amplitude de déplacement de chacune desdites images étant fonction du sens d'inclinaison du système d'acquisition et de la valeur de l'angle d'inclinaison.

Préférentiellement, la plage angulaire admissible varie de plus ou moins 10° autour d'une position de référence verticale. Il est supposé que la position de référence du système d'acquisition d'images est une position verticale pour laquelle l'axe central de visée dudit système est horizontal. Avantageusement, la plage d'inclinaison admissible est comprise entre 2° et 8°, dans un sens ou dans l'autre.

De façon avantageuse, les lunettes de l'individu sont équipées d'un clip doté d'au moins un marqueur, et l'inclinaison de la monture est évaluée à partir d'une seule caméra. En effet, le clip qui est doté de marqueurs, permet une visualisation précise de l'inclinaison de la monture sur le visage de l'individu. Dans ce cas, une seule caméra est nécessaire pour déterminer cette inclinaison à partir des caractéristiques dimensionnelles dudit clip sur l'image capturée par la caméra. Il est supposé que ladite caméra fait partie intégrante du système d'acquisition d'images mis en oeuvre dans le procédé selon l'invention.

Selon un autre mode de réalisation préféré d'un procédé selon l'invention, l'inclinaison de la monture est évaluée au moyen de deux caméras utilisées en mode stéréoscopique. Pour cette configuration, deux caméras distinctes placées à deux endroits différents et filmant chacune la monture, permettent de déterminer l'inclinaison de ladite monture sans avoir recours à un clip de marquage. Il est supposé que pour cette configuration, les deux caméras appartiennent au système d'acquisition d'images mis en oeuvre dans le procédé.

Avantageusement, le moyen de détermination de l'inclinaison du système d'acquisition d'images est un inclinomètre logé dans ledit système.

De façon préférentielle, le dispositif informatique est doté d'un avertisseur, qui se déclenche dès que l'angle d'inclinaison du système d'acquisition sort de la plage angulaire admissible. Cet avertisseur peut être sonore ou visuel, et peut revêtir toute forme, l'essentiel étant que la personne utilisant le système d'acquisition d'images soit avertie qu'elle ne peut pas prendre d'images lorsque cet avertisseur est activé. Il est préférable que cet avertisseur apparaisse sur le système d'acquisition d'images, afin que la personne manipulant ce système soit informée directement et instantanément. L'avertisseur peut par exemple être constitué par un voyant coloré qui apparaitrait sur l'écran en mode continu ou par clignotement. Il pourrait également apparaitre sous la forme d'un son identifiable, qui se déclencherait dès que le système serait trop incliné.

Préférentiellement, les paramètres morpho-géométriques mesurés au moyen d'un procédé selon l'invention sont à choisir dans le groupe constitué par la hauteur entre la pupille et le rebord inférieur du verre, l'angle pantoscopique, le galbe des lunettes et la distance pupillaire.

Selon un mode de réalisation préféré d'un procédé selon l'invention, ledit procédé est piloté par l'individu porteur de lunettes, qui règle la position du système d'acquisition d'images en se référant aux prises de vue renvoyées par l'écran, et manipule le calculateur pour déclencher la capture d'images ainsi que le traitement desdites images. En effet, le procédé de mesures selon l'invention est accessible à un individu porteur de lunettes et possédant le dispositif informatique adéquat. Ce dispositif pourrait être constitué par un ordinateur du commerce doté d'une webcam, d'un inclinomètre et d'un logiciel de traitement d'images adapté.

Selon un autre mode de réalisation préféré d'un procédé selon l'invention, ledit procédé est piloté par un opticien placé en face de l'individu, et qui manipule le système d'acquisition d'images pour régler sa position dans l'espace, l'opticien guidant l'individu et commandant le calculateur pour déclencher la capture d'images ainsi que le traitement desdites images. Pour ce mode de réalisation, les éléments constitutifs du dispositif informatique sont agencés de façon différente de celle retenue pour un individu seul. En effet, l'opticien doit avoir accès à l'écran ainsi qu'au système d'acquisition d'images, pour régler la position dudit système en fonction des images apparaissant sur ledit écran. L'individu porteur de lunettes doit, quant à lui, se positionner en face dudit système d'acquisition d'images en suivant les recommandations de l'opticien, qui le guide durant toutes les étapes du procédé.

De façon avantageuse, le résultat des mesures est affiché sur l'écran. Il est en effet important pour ajouter à l'ergonomie du procédé selon l'invention, que le résultat des mesures apparaisse rapidement et directement sur un support visuel pouvant se lire facilement et sans ambigüité par l'individu porteur de lunettes et/ou l'opticien. D'autres moyens peuvent également être retenus, comme un document imprimé sortant d'une imprimante connectée au calculateur.

Préférentiellement, le procédé comprend une étape de contrôle de la distance entre le système d'acquisition d'images et le visage de l'individu, de manière à s'assurer que cette distance est dans une plage acceptable. Bien que le procédé de mesure selon l'invention présente une certaine souplesse d'utilisation, il demeure limité au niveau de la distance séparant l'individu et le système d'acquisition d'images. En effet, le visage de l'individu représenté essentiellement par ses yeux ainsi que la monture des lunettes qu'il porte, doit occuper une certaine zone de l'écran, et ce, avec une résolution suffisante, pour bien repérer certains détails dudit visage et de ladite monture. Or, au-delà d'une certaine distance, le visage est mal positionné sur l'écran ou apparait trop petit, et la résolution n'est alors pas suffisante pour identifier les détails recherchés. Il est donc important de bien maitriser cette distance.

L'invention a également pour objet un dispositif informatique pour la mise en oeuvre d'un procédé selon l'invention. La principale caractéristique d'un dispositif informatique selon l'invention est qu'il comprend un calculateur, une cible, au moins une caméra équipée d'un inclinomètre, un écran d'affichage permettant de visualiser les prises de vue assurées par chaque caméra ainsi que le résultat des mesures. Ce dispositif de mesure s'apparente à un kit de mesure, dans lequel les différentes pièces viennent se connecter les unes aux autres pour interagir et fournir les mesures souhaitées, sans forcément obéir à un agencement particulier et contraignant. En effet, ce type de dispositif présente une certaine souplesse au niveau de son montage, contrairement à une colonne fixe, et peut donc facilement être installé dans tout type d'environnement, que ce soit sur une table ou un bureau, ou tout simplement parterre. Le calculateur permet de déclencher les prises de vue aux moments souhaités, et permet également de réaliser le traitement des images obtenues. De façon préférentielle, la cible est portée par le système d'acquisition d'images.

De façon préférentielle, la position de la caméra et la position de l'écran peuvent être ajustées indépendamment l'une de l'autre.

Avantageusement, le dispositif de mesure est constitué par une tablette regroupant l'écran, une caméra secondaire, l'inclinomètre et le calculateur, ainsi que par ladite au moins une caméra. Cette version du dispositif est l'une des plus compactes, et peut donc être installée dans un espace de faible encombrement. Le fait de regrouper différentes pièces constitutives du dispositif dans une tablette de faible dimension, ajoute encore à la souplesse d'utilisation du dispositif de mesure, car un individu ou un opérateur peut piloter l'ensemble du procédé à partir d'un seul et même objet, et opérer les réglages adéquats sans avoir à se déplacer ni à bouger les pièces les unes par rapport aux autres. Il est supposé qu'une tablette est un objet dont les faibles dimensions sont compatibles avec une manipulation manuelle aisée de la part d'un individu ou d'un opérateur. Ce type d'objet peut, en particulier, être facilement déplacé manuellement dans une pièce, afin d'être installé dans un endroit précis et être orienté dans la direction souhaitée. Cette tablette peut posséder un écran tactile, ou être utilisé plus classiquement au moyen d'une souris. Elle peut également comprendre au moins deux caméras pour assurer les mesures de paramètres en stéréoscopie, comme par exemple l'angle pantoscopique. La caméra peut être fixée directement à cette tablette, soit à un support permettant de soutenir ladite tablette.

Les procédés de mesure de paramètres morpho-géométriques d'un individu selon l'invention, présentent l'avantage d'être particulièrement ergonomique et conviviaux vis-à-vis d'un individu porteur de lunettes, dans la mesure celui-ci n'a pas à porter un équipement complémentaire et n'a pas à se livrer à une série de postures contraignantes et répétitives. Tout est organisé pour que le porteur de lunettes passe les différentes étapes du procédé en demeurant dans des postures naturelles et confortables. Ils ont de plus l'avantage de restituer instantanément à l'individu ou à l'opticien, le résultat des mesures, soit par l'intermédiaire d'un écran, soit par l'intermédiaire de tout autre moyen pouvant délivrer clairement et instantanément ces informations. Enfin, le dispositif de mesure mis en oeuvre dans un procédé selon l'invention, présente l'avantage d'être de dimension réduite, et peut donc être facilement réglé et/ou être installé dans une pièce de faible volume, sur une table ou sur un bureau.

On donne ci-après, une description détaillée d'un mode de réalisation préféré d'un procédé de mesures selon l'invention en se référant aux figures 1 à 5.

- La figure 1 est une vue schématique et éclatée d'une tablette de mesure selon l'invention,

- La figure 2 est une vue de face d'une tablette selon l'invention montrant un exemple d'image exploitable en mode paysage,

- La figure 3 est une vue de face d'une tablette selon l'invention montrant un exemple d'image trop agrandie en mode paysage,

- La figure 4 est une vue schématique de coté montrant l'oeil d'un individu porteur de lunettes et une tablette dont le plan est vertical, l'individu regardant une caméra sur la tablette,

- La figure 5 est une vue schématique de coté montrant l'oeil d'un individu porteur de lunettes et une tablette dont le plan est incliné par rapport à un plan vertical, l'individu regardant une caméra sur la tablette.

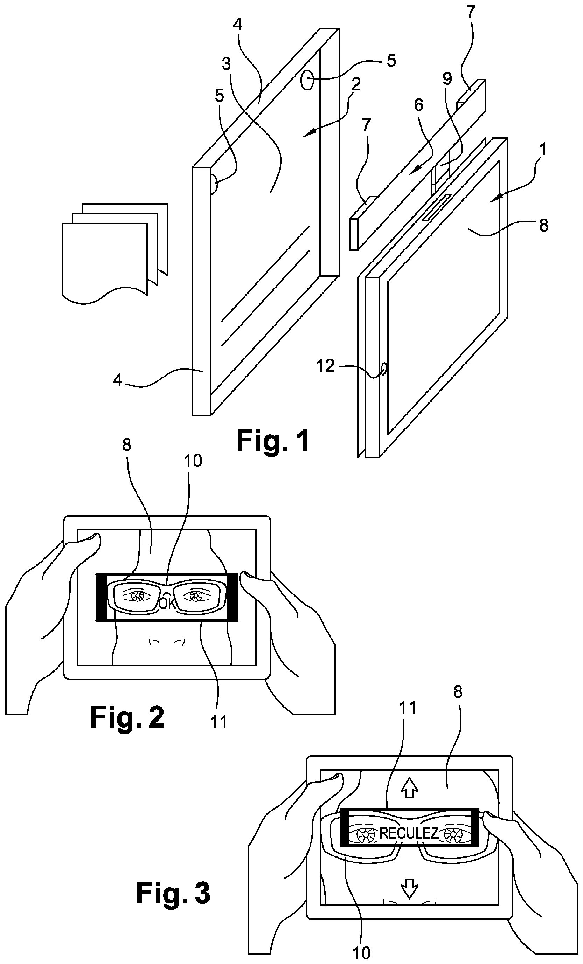

En se référant à la figure 1, un dispositif informatique selon l'invention, permettant de mettre en oeuvre un procédé de mesures de paramètres morpho-géométriques selon l'invention, est constitué par une tablette 1 apte à venir s'insérer dans un étui rigide 2 de protection. Cet étui 2 présente une paroi plane principale 3 de forme rectangulaire, délimitée par quatre bords 4 perpendiculaires, ladite paroi 3 et lesdits bords 4 permettant de définir une cuvette rectangulaire. La paroi principale 3 est percée de deux trous 5. La tablette 1 a la forme d'un parallélépipède rectangle de faible épaisseur, et est surmontée par une tige 6 allongée, et parallèle à l'un de ses deux grands cotés. Cette tige 6 sert de support à deux caméras 7 placées au niveau de ses deux extrémités prises le long d'un axe longitudinal de ladite tige 6, et, une fois que la tablette 1 a été logée dans son étui 2 de protection, les deux caméras 7 font face aux deux trous 5 de la paroi principale 3 dudit étui 2. La tablette 1 comporte un écran 8 permettant, d'une part de visualiser les images prises par les caméras 7, et d'autre part, d'afficher le résultat des mesures. La tige 6 allongée est orientable en rotation autour d'un axe 9 reliant ladite tige 6 à la tablette 1, cet axe 9 étant perpendiculaire à l'axe longitudinal de la tige 6 et aux grands coté de la tablette 1 rectangulaire. De cette manière, les caméras peuvent par exemple être orientées du coté de l'écran 8 ou de façon opposée à cet écran 8. Ainsi, la première configuration sera mieux adaptée à une personne seule désirant effectuer elle-même la mesure des paramètres. L'autre configuration, pour laquelle les caméras 7 et l'écran 8 sont en opposition, sera retenue dans le cas où un opticien souhaiterait réaliser des mesures sur un individu porteur de lunettes. Les caméras 7 ont une résolution élevée, qui est avantageusement supérieure à 1Million de Pixels, afin de pouvoir bien identifier sur une image tous les détails des yeux et de la monture du porteur. Les mesures de l'angle pantoscopique et/ou de la hauteur reliant la pupille de chaque oeil au bord inférieur du verre, au moyen d'un procédé selon l'invention, peuvent s'effectuer de deux manières différentes : soit par le biais des deux caméras 7 implantées dans la tablette 1 et utilisées en mode stéréoscopique, soit par le biais d'une seule caméra 7 et d'un clip fixé à la monture de l'individu, ledit clip étant doté de marqueurs et permettant de déterminer l'échelle de l'image ainsi que l'orientation précise de la monture dans l'espace. La tablette 1 regroupe un calculateur apte à déclencher la ou les deux caméras pour obtenir les images souhaitées, ainsi qu'un logiciel de traitement desdites images pour obtenir la valeur des paramètres mesurées et corrigées. La tablette 1 peut être tactile et être manipulée au moyen d'une pression digitale sur l'écran, au niveau de l'icône approprié. Mais elle peut également être manipulée plus classiquement au moyen d'une souris. Elle est également dotée d'un inclinomètre permettant à tout instant de déterminer son inclinaison, et en particulier lors des phases de capture d'images. La connaissance de l'angle d'inclinaison de la tablette 1 est fondamentale pour la détermination des paramètres morpho-géométriques, puisque cet angle va influencer la valeur desdits paramètres, et qu'il va donc nécessiter l'introduction d'un paramètre correctif adapté à son amplitude. La tablette 1 est préprogrammée pour être manipulée sur une plage d'inclinaison donnée, préférentiellement entre 0 et plus ou moins 6°, de façon à ne pas trop biaiser les mesures en introduisant des erreurs trop importantes. En effet, si l'on suppose que la position de référence de la tablette 1 est un plan vertical correspondant à une direction de visée des caméras 7 horizontale, cette tablette 1 peut donc être inclinée d'un angle maximum de 6°, soit vers l'arrière, soit vers l'avant. Dans le cas où la personne manipulant la tablette 1 dépasserait cet angle maximum autorisé, un voyant lumineux apparait sur l'image à l'écran, et le processus de mesure est désactivé. La tablette 1 est également équipée d'un moyen de compensation de son inclinaison, lui permettant de centrer à l'écran l'image capturée, quel que soit son angle d'inclinaison. Cette opération de compensation est instantanée, si bien que la personne manipulant la tablette 1 dans la plage d'inclinaison préprogrammée, aura toujours une image centrée sur l'écran des yeux et de la monture 10 de l'individu se soumettant au procédé.

En se référant aux figures 2 et 3, le réglage des images selon l'invention s'effectue à travers une mire 11 apparaissant à l'écran. Cette mire 11 est représentée par un rectangle de taille constante, et si le réglage de la tablette 1 est satisfaisant comme le montre la figure 2, la monture 10 ainsi que les yeux de l'individu doivent s'inscrire dans cette mire 11 de référence. Si le réglage n'est pas satisfaisant, dans le cas par exemple où la tablette 1 serait trop proche de l'individu porteur de lunettes, comme le montre la figure 3, la monture 10 déborde de cette mire 11. Il convient alors de reculer la tablette 1 afin que la monture 10 puisse s'inscrire à l'intérieur de cette mire 11. La tablette 1 peut également être pourvue d'une cible 12, sous la forme d'une marque colorée et/ou en relief placée à proximité des caméras, ladite cible 12 constituant un point que l'individu va fixer visuellement en cours de procédé. La cible 12 est préférentiellement placée à la même hauteur que les caméras 7. Enfin, la tablette 1 peut également posséder un flash pour améliorer les conditions d'éclairage des prises de vue, afin de mieux faire ressortir sur les images certains détails du visage, comme par exemple la pupille des yeux, ainsi que la position de la monture 10.

La tablette 1 qui vient d'être décrite permet de mettre en oeuvre un procédé selon l'invention, ledit procédé ayant pour but de mesurer certains paramètres morpho-géométriques. Un tel procédé comprend les étapes suivantes. Il s'agit d'un mode de réalisation préféré mais non limitatif, certaines étapes qui vont être décrites, pouvant être éliminées ou s'inverser avec d'autres étapes.

- Un opticien oriente la tablette 1 de manière à pouvoir observer l'écran 8 et à pouvoir déclencher facilement les commandes de celle-ci. Les deux caméras 7 sont placées au dos de ladite tablette 1 derrière l'écran 8, et peuvent prendre des images d'un individu porteur de lunettes 10 positionné en face de l'opticien devant les caméras 7.
- L'opticien règle d'abord la distance entre le visage de l'individu et la tablette 1 afin que les yeux et la monture 10 s'inscrivent dans la mire 11 de l'écran. La tablette 1 affiche en temps réel cette distance, soit par l'intermédiaire d'une valeur, soit par l'intermédiaire d'un motif permettant de s'assurer que la gamme de distance est correcte. La mesure de la distance s'effectue classiquement par mesure stéréographique et détermination des correspondances entre les points des deux caméras 7. On limite la zone de mesure de distance, correspondant à la mire 11, afin de permettre une mesure rapide. Il est à préciser que la tablette 1 est préférentiellement utilisée en mode portrait.
- L'opticien règle ensuite si nécessaire, l'inclinaison de la tablette 1 dans la gamme admissible, qui est par exemple comprise entre +6° et - 6°. Les angles d'inclinaison ne doivent cependant pas dépasser des valeurs limites, sous peine de générer des erreurs trop importantes sur les mesures. Pour mesurer correctement, par exemple, l'angle pantoscopique, il est nécessaire que le regard de l'individu observant la cible soit horizontal. Une première solution consisterait à orienter la tablette 1 de façon peu inclinée, mais cela imposerait à l'opticien des contraintes ergonomiques importantes. De plus, l'erreur de positionnement de la cible 12 sur l'axe de vision horizontal ne sera pas complètement nulle, et par conséquent des erreurs de mesure d'angle pantoscopique persisteront. Une autre solution, qui est privilégiée pour le procédé de mesures selon l'invention, est de proposer une compensation active de l'inclinaison de la tablette 1, afin de permettre une gamme d'inclinaison de la tablette 1 assez étendue. De cette manière, l'opticien n'aura qu'à vérifier que la tablette 1 est dans la gamme d'inclinaison acceptable pour savoir que le réglage de l'inclinaison est satisfaisant. Le principe de la compensation active est détaillé dans la dernière partie de la description ci-après.
- Une fois l'inclinaison de la tablette 1 réglée, il ne reste plus qu'à ajuster la hauteur de ladite tablette 1 de façon à ce que l'individu regarde la cible 12 selon une direction sensiblement horizontale, et que ses yeux et la monture 10 apparaissent au milieu de l'écran 8 dans la mire 11 de guidage. Le réglage de la hauteur est alors effectif quand les yeux 27 de l'individu sont centrés sur l'écran 8.
- Lorsque la tablette 1 est réglée en hauteur et en inclinaison, et que la distance de mesure a été fixée, l'opticien demande à l'individu de regarder de façon naturelle et sans contrainte, la cible 12 de la tablette, et déclenche alors les caméras 7, qui acquièrent chacune et simultanément une photo des yeux et de la monture 10 de l'individu. Ces 2 photos à haute résolution, serviront à la mesure précise de la distance entre la caméra 7 et chacun des points du visage et de la monture 10, en utilisant le principe de vision stéréoscopique. Le flash est utilisé pour améliorer les conditions d'éclairage.
- L'opticien active alors le logiciel de traitement d'images du calculateur inclus dans la tablette 1, pour mesurer les paramètres morpho-géométrique servant à la personnalisation des verres ophtalmiques, à partir des deux photos acquises. En effet, le principe de mesure stéréoscopique permet de déterminer les coordonnées tridimensionnelles, dans le repère de la tablette 1, des différents points caractéristiques du visage et de la monture 10. De cette manière, il est possible de mesurer, par exemple, la distance pupillaire, la hauteur entre le bord inférieur de la monture 10 et la pupille, l'angle pantoscopique et le galbe de la monture 10.

Le principe de la compensation active est le suivant. Il est supposé que la distance de mesure, la position de la cible 12 et de la caméra 7 sur la tablette 1 en mode réglage dans ladite tablette 1 sont connues. De même, l'angle d'inclinaison de la tablette 1 est connu par l'intermédiaire de l'inclinomètre.

Premier cas de figure : l'angle d'inclinaison est nul.

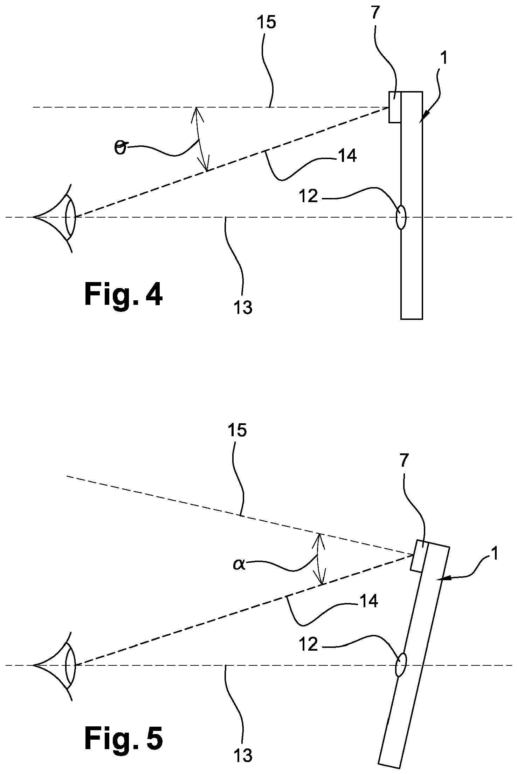

En se référant à la figure 4, si l'angle d'inclinaison est nul, et si l'axe 13 du regard est horizontal pour observer la cible 12, alors l'axe 14 passant par la caméra et les yeux du porteur fait un angle θ avec l'axe de visée 15 de la caméra 7. Une zone image est alors définie, en étant extraite de l'image complète de la caméra 7 et qui est centrée sur l'axe 14 reliant ladite caméra 7 aux yeux du porteur. Cette zone est affichée sur l'écran 8, et le pixel correspondant à l'axe 14 reliant les yeux du porteur à ladite caméra 7 et qui fait un angle θ avec l'axe de visée de la caméra 7, sera donc le pixel au centre de l'écran 8.

Ainsi, si les yeux sont affichés au centre de l'écran 8, cela signifie que l'axe de vision est horizontal. Dans le cas contraire, l'opérateur doit monter ou descendre la tablette 1 pour amener les yeux au centre de l'écran 8, tout en maintenant l'angle à 0°, ce qui est contraignant et en pratique difficile à réaliser.

Deuxième cas de figure : l'angle d'inclinaison est non nul

Dans ce cas, si l'angle de vision est horizontal, alors l'axe 14 reliant les yeux du porteur à la caméra 7 fait un angle α avec l'axe de visée 15 de ladite caméra 7.

On a de plus :

$$α = θ + \text{Angle d'inclinaison de la tablette 1}$$

On extrait alors de l'image complète obtenue par la caméra 7, une zone image centrée sur l'axe 14 reliant les yeux du porteur à ladite caméra 7, et on affiche cette zone image sur l'écran 8, le pixel correspondant audit axe 14 étant le pixel au centre de l'écran 8. Ainsi, pour l'angle d'inclinaison de la tablette 1 considéré, les yeux affichés au centre de l'écran 8 constituent une garantie que l'axe de vision est bien horizontal. En pratique, pour chaque image prise par la ou les caméras 7, l'angle d'inclinaison de la tablette 1 est déterminé, et permet de définir à chaque fois une zone image de l'image complète fournie par la caméra 7, cette zone étant affichée en temps réel sur l'écran 8. Ainsi, quel que soit l'angle d'inclinaison de la tablette 1, un affichage des yeux au centre de l'écran 8 est une garantie que l'axe de vision du porteur est horizontal. Grâce à ce phénomène de compensation, l'opticien n'a plus à se préoccuper de régler ou maintenir cet angle d'inclinaison. Il doit juste s'assurer que la distance de mesure est correcte et que les yeux sont au centre de l'écran 8 en jouant sur la hauteur de la tablette 1.

Il est à noter que l'extraction des paramètres morpho-géométriques, tels que par exemple, les hauteurs et la distance pupillaire, s'effectue classiquement à la manière de la méthode décrite dans le brevet US2010195045.

**Revendications**

1.  Procédé de mesures d'au moins un paramètre morpho-géométrique d'un individu portant des lunettes (10), ledit procédé mettant en oeuvre un dispositif informatique (1) autonome comprenant un écran (8), une cible (12), un système d'acquisition d'images (7) compact doté d'un moyen de détermination de son inclinaison et relié audit écran (8), et un calculateur permettant de piloter le système d'acquisition (7) d'images et de traiter les images obtenues, ledit procédé comprenant les étapes suivantes,

    - Réglage de l'inclinaison du système d'acquisition (7) d'images pour demeurer dans une plage angulaire admissible, ledit système d'acquisition d'images (7) étant doté d'un dispositif de compensation de son inclinaison, de manière à obtenir une image des yeux de l'individu toujours centrée sur l'écran (8), quelle que soit l'inclinaison dudit système (7) dans la plage angulaire admissible.
    - Réglage de la hauteur du système d'acquisition (7) d'images pour que l'individu puisse visualiser la cible (12) selon un axe de vision sensiblement horizontal,
    - Observation par l'individu de la cible (12) dans une position de confort n'impliquant aucune contrainte de positionnement, les lunettes (10) occupant une position naturelle sur le visage de l'individu,
- Acquisition d'au moins une image des yeux et de la monture (10) dans ladite position d'observation au moyen du système d'acquisition d'images,
- Traitement de ladite au moins une image par le calculateur pour déterminer chaque paramètre morpho-géométrique de l'individu, à partir de la position des pupilles et de l'inclinaison de ses lunettes (10),
- Restitution du résultat des mesures,
**caractérisé en ce que** le réglage des images s'effectue à travers une mire (11) apparaissant à l'écran (8) et représentée par un rectangle de taille constante, le procédé incluant une étape de détermination de la condition selon laquelle la monture (10) et les yeux de l'individu s'inscrivent dans cette mire (11) de référence, et ledit réglage étant satisfaisant lorsque cette condition est remplie.

2. Procédé selon la revendication 1, **caractérisé en ce que** la compensation consiste à déplacer vers le centre de l'écran (8) chaque image obtenue par le système d'acquisition (7), le sens et l'amplitude de déplacement de chacune desdites images étant fonction du sens d'inclinaison du système d'acquisition (7) et de la valeur de l'angle d'inclinaison.

3. Procédé selon l'une quelconque des revendications 1 ou 2, **caractérisé en ce que** les lunettes (10) de l'individu sont équipées d'un clip doté d'au moins un marqueur, et l'inclinaison de la monture (10) est évaluée à partir d'une seule caméra (7).

4. Procédé selon l'une quelconque des revendications 1 ou 2, l'inclinaison de la monture (10) est évaluée au moyen de deux caméras (7) utilisées en mode stéréoscopique.

5. Procédé selon l'une quelconque des revendications 1 à 4, **caractérisé en ce que** le moyen de détermination de l'inclinaison du système d'acquisition (7) d'images est un inclinomètre logé dans ledit système (7).

6. Procédé selon l'une quelconque des revendications 1 à 5, **caractérisé en ce que** le dispositif informatique (1) est doté d'un avertisseur, qui se déclenche dès que l'angle d'inclinaison du système d'acquisition (7) sort de la plage angulaire admissible.

7. Procédé selon l'une quelconque des revendications 1 à 6, **caractérisé en ce que** la plage angulaire admissible varie de plus ou moins 10° autour d'une position de référence verticale.

8. Procédé selon l'une quelconque des revendications 1 à 7, **caractérisé en ce que** les paramètres morpho-géométriques mesurés sont à choisir dans le groupe constitué par la hauteur entre la pupille et le rebord inférieur du verre, l'angle pantoscopique, le galbe des lunettes et la distance pupillaire.

9. Procédé selon l'une quelconque des revendications 1 à 8, **caractérisé en ce que** ledit procédé est piloté par l'individu porteur de lunettes (10), qui règle la position du système d'acquisition (7) d'images en se référant aux prises de vue renvoyées par l'écran (8), et manipule le calculateur pour déclencher la capture d'images ainsi que le traitement desdites images.

10. Procédé selon l'une quelconque des revendications 1 à 8, **caractérisé en ce que** ledit procédé est piloté par un opticien placé en face de l'individu, et qui manipule le système d'acquisition (7) d'images pour régler sa position dans l'espace, et **en ce que** l'opticien guide l'individu et commande le calculateur pour déclencher la capture d'images ainsi que le traitement desdites images.

11. Procédé selon l'une quelconque des revendications 1 à 10, **caractérisé en ce que** le résultat des mesures est affiché sur l'écran (8).

12. Procédé selon l'une quelconque des revendications 1 à 11, **caractérisé en ce qu'**il comprend une étape de contrôle de la distance entre le système d'acquisition (7) d'images et le visage de l'individu, de manière à s'assurer que cette distance est dans une plage acceptable.

13. Dispositif informatique pour la mise en oeuvre d'un procédé selon l'une quelconque des revendications 1 à 12, **caractérisé en ce qu'**il comprend un calculateur, une cible (12), au moins une caméra (7) équipée d'un inclinomètre, un écran (8) d'affichage permettant de visualiser les prises de vue assurées par ladite caméra (7) ainsi que le résultat des mesures, **caractérisé en ce que** ledit écran (8) fait apparaitre une mire (11) représentée par un rectangle de taille constante, le réglage des images étant satisfaisant lorsque la monture (10) et les yeux de l'individu s'inscrivent dans cette mire (11) de référence.

14. Dispositif selon la revendication 13, **caractérisé en ce que** la position de la caméra (7) et la position de l'écran (8) peuvent être ajustées indépendamment l'une de l'autre.

15. Dispositif selon l'une quelconque des revendications 13 ou 14, **caractérisé en ce qu'**il est constitué par une tablette (1) regroupant l'écran (8), une caméra secondaire, l'inclinomètre et le calculateur, ainsi que par ladite au moins une caméra (7).

**Patentansprüche**

1. Verfahren zum Messen wenigstens eines geometrisch-morphometrischen Parameters einer Person, die eine Brille (10) trägt, wobei bei dem Verfahren eine autonome Datenverarbeitungsvorrichtung (1) zum Einsatz kommt, die einen Bildschirm (8), ein Ziel (12), ein kompaktes Bilderfassungssystem (7), das mit einem Mittel zum Bestimmen seiner Neigung versehen und mit dem Bildschirm (8) verbunden ist, und einen Rechner, der ermöglicht, das Bilderfassungssystem (7) zu steuern und die erhaltenen Bilder zu verarbeiten, umfasst, wobei das Verfahren die folgenden Schritte umfasst:

   - Einstellen der Neigung des Bilderfassungssystems (7), um in einem zulässigen Winkelbereich zu bleiben, wobei das Bilderfassungssystem (7) mit einer Vorrichtung zum Ausgleich seiner Neigung versehen ist, um so ein Bild der Augen der Person zu erhalten, das immer auf dem Bildschirm (8) zentriert ist, gleichgültig, welche Neigung des Systems (7) im zulässigen Winkelbereich vorliegt,
   - Einstellen der Höhe des Bilderfassungssystems (7), damit die Person das Ziel (12) in einer im Wesentlichen horizontalen Blickrichtung sehen kann,
   - Betrachten des Ziels (12) durch die Person in einer Komfortposition, die keine Einschränkung der Positionierung erfordert, wobei die Brille (10) eine natürliche Position auf dem Gesicht der Person einnimmt,
   - Erfassen wenigstens eines Bildes der Augen und des Gestells (10) in dieser Betrachtungsposition mittels des Bilderfassungssystems,
   - Verarbeiten des wenigstens einen Bildes durch den Rechner, um jeden geometrisch-morphometrischen Parameter der Person anhand der Position der Pupillen und der Neigung ihrer Brille (10) zu bestimmen,
   - Wiedergeben des Ergebnisses der Messungen, **dadurch gekennzeichnet, dass** das Einstellen der Bilder durch ein Visier (11) erfolgt, das auf dem Bildschirm (8) erscheint und von einem Rechteck konstanter Größe dargestellt wird, wobei das Verfahren einen Schritt der Überprüfung der Bedingung beinhaltet, gemäß der das Gestell (10) und die Augen der Person in dieses Referenz-Visier (11) einbeschrieben sind, und wobei die Einstellung zufriedenstellend ist, wenn diese Bedingung erfüllt ist.

2. Verfahren nach Anspruch 1, **dadurch gekennzeichnet, dass** der Ausgleich darin besteht, jedes von dem Bilderfassungssystem (7) erhaltene Bild in Richtung der Mitte des Bildschirms (8) zu verschieben, wobei die Richtung und der Betrag der Verschiebung jedes dieser Bilder von der Neigungsrichtung des Erfassungssystems (7) und vom Wert des Neigungswinkels abhängen.

3. Verfahren nach einem der Ansprüche 1 oder 2, **dadurch gekennzeichnet, dass** die Brille (10) der Person mit einem Clip ausgestattet ist, der mit wenigstens einer Marke versehen ist, wobei die Neigung des Gestells (10) anhand einer einzigen Kamera (7) bestimmt wird.

4. Verfahren nach einem der Ansprüche 1 oder 2, wobei die Neigung des Gestells (10) mittels zweier Kameras (7) bestimmt wird, die in einem stereoskopischen Modus verwendet werden.

5. Verfahren nach einem der Ansprüche 1 bis 4, **dadurch gekennzeichnet, dass** das Mittel zur Bestimmung der Neigung des Bilderfassungssystems (7) ein Neigungsmesser ist, der im System (7) untergebracht ist.

6. Verfahren nach einem der Ansprüche 1 bis 5, **dadurch gekennzeichnet, dass** die Datenverarbeitungsvorrichtung (1) mit einem Warnmelder versehen ist, der ausgelöst wird, sobald der Neigungswinkel des Erfassungssystems (7) den zulässigen Winkelbereich verlässt.

7. Verfahren nach einem der Ansprüche 1 bis 6, **dadurch gekennzeichnet, dass** der zulässige Winkelbereich um ungefähr 10° um eine vertikale Referenzposition herum variiert.

8. Verfahren nach einem der Ansprüche 1 bis 7, **dadurch gekennzeichnet, dass** die gemessenen geometrisch-morphometrischen Parameter aus der Gruppe auszuwählen sind, die aus der Höhe zwischen der Pupille und dem unteren Rand des Glases, dem pantoskopischen Winkel, der Wölbung der Brille und der Pupillendistanz besteht.

9. Verfahren nach einem der Ansprüche 1 bis 8, **dadurch gekennzeichnet, dass** das Verfahren von der die Brille (10) tragenden Person gesteuert wird, welche die Position des Bilderfassungssystems (7) einstellt, indem sie sich auf die von dem Bildschirm (8) wiedergegebenen Aufnahmen stützt und den Rechner bedient, um das Aufnehmen von Bildern sowie die Verarbeitung dieser Bilder auszulösen.

10. Verfahren nach einem der Ansprüche 1 bis 8, **dadurch gekennzeichnet, dass** das Verfahren von einem Optiker gesteuert wird, der sich gegenüber der Person befindet und das Bilderfassungssystem (7) handhabt, um seine Position im Raum einzustellen, und dadurch, dass der Optiker die Person anleitet und den Rechner bedient, um das Aufnehmen von Bildern sowie die Verarbeitung dieser Bilder auszulösen.

11. Verfahren nach einem der Ansprüche 1 bis 10, **dadurch gekennzeichnet, dass** das Ergebnis der Messungen auf dem Bildschirm (8) angezeigt wird.

12. Verfahren nach einem der Ansprüche 1 bis 11, **dadurch gekennzeichnet, dass** es einen Schritt der Kontrolle des Abstands zwischen dem Bilderfassungssystem (7) und dem Gesicht der Person umfasst, um sich so zu vergewissern, dass dieser Abstand im zulässigen Bereich liegt.

13. Datenverarbeitungsvorrichtung für die Durchführung eines Verfahrens nach einem der Ansprüche 1 bis 12, **dadurch gekennzeichnet, dass** sie einen Rechner, ein Ziel (12), wenigstens eine Kamera (7), die mit einem Neigungsmesser ausgestattet ist, und einen Anzeigebildschirm (8), der es ermöglicht, die durch die Kamera (7) gewährleisteten Aufnahmen sowie das Ergebnis der Messungen anzuzeigen, umfasst, **dadurch gekennzeichnet, dass** der Bildschirm (8) ein Visier (11) erscheinen lässt, das von einem Rechteck konstanter Größe dargestellt wird, wobei die Einstellung der Bilder zufriedenstellend ist, wenn das Gestell (10) und die Augen der Person in dieses Referenz-Visier (11) einbeschrieben sind.

14. Vorrichtung nach Anspruch 13, **dadurch gekennzeichnet, dass** die Position der Kamera (7) und die Position des Bildschirms (8) unabhängig voneinander justiert werden können.

15. Vorrichtung nach einem der Ansprüche 13 oder 14, **dadurch gekennzeichnet, dass** sie aus einer Platte (1), welche den Bildschirm (8), eine Sekundärkamera, den Neigungsmesser und den Rechner umfasst, sowie aus der wenigstens einen Kamera (7) besteht.

**Claims**

1. Method for measuring at least one morpho-geometric parameter of an individual wearing spectacles (10), said method employing an autonomous information-processing device (1) comprising a screen (8), a target (12), a compact image acquisition system (7) provided with a means for determining its inclination and connected to said screen (8), and a processor for controlling the image acquisition system (7) and for processing the images obtained, said method comprising the following steps:

- Adjustment of the inclination of the image acquisition system (7) in order to remain within a permissible angular range, said image acquisition system (7) being provided with a device for compensating for its inclination, so as to obtain an image of the individual's eyes that is always centred on the screen (8) whatever the inclination of said system (7) in the permissible angular range;
- Adjustment of the height of the image acquisition system (7) such that the individual can view the target (12) along a substantially horizontal vision axis;
- Observation of the target (12) by the individual, who is in a comfortable position that can be adopted without effort, the spectacles (10) occupying a natural position on the face of the individual;
- Acquisition of at least one image of the eyes and of the frame (10) in said observation position by means of the image acquisition system;
- Processing of said at least one image by the processor in order to determine each morpho-geometric parameter of the individual from the position of the pupils and from the inclination of the spectacles (10);
- Recovery of the results of the measurements;
**characterized in that** the adjustment of the images is effected by way of a chart (11) belonging to the screen (8) and represented by a rectangle of constant size, the method including a step of determining the condition according to which the frame (10) and the eyes of the individual are inscribed within this reference chart (11), and said adjustment being satisfactory when this condition is fulfilled.

2. Method according to Claim 1, **characterized in that** the compensation includes moving each image obtained by the acquisition system (7) to the centre of the screen (8), the direction and the amplitude of movement of each of said images being dependent on the direction of inclination of the acquisition system (7) and on the value of the angle of inclination.

3. Method according to either of Claims 1 and 2, **characterized in that** the spectacles (10) of the individual are equipped with a clip provided with at least one marker, and the inclination of the frame (10) is evaluated using a single camera (7).

4. Method according to either of Claims 1 and 2, the inclination of the frame (10) being evaluated by means of two cameras (7) used in stereoscopic mode.

5. Method according to any one of Claims 1 to 4, **characterized in that** the means for determining the inclination of the image acquisition system (7) is an inclinometer housed in said system (7).

6. Method according to any one of Claims 1 to 5, **characterized in that** the information-processing device (1) is provided with an alarm that is triggered when the angle of inclination of the acquisition system (7) departs from the permissible angular range.

7. Method according to any one of Claims 1 to 6, **characterized in that** the permissible angular range varies by plus or minus 10° about a vertical reference position.

8. Method according to any one of Claims 1 to 7, **characterized in that** the morpho-geometric parameters measured are chosen from the group consisting of the height between the pupil and the lower rim of the lens, the pantoscopic angle, the curve of the spectacles and the pupillary distance.

9. Method according to any one of Claims 1 to 8, **characterized in that** said method is implemented by the individual who is wearing the spectacles (10), the individual adjusting the position of the image acquisition system (7), by reference to the pictures displayed by the screen (8), and using the processor to trigger the acquisition of images and the processing of said images.

10. Method according to any one of Claims 1 to 8, **characterized in that** said method is implemented by an optician who is positioned facing the individual and who uses the image acquisition system (7) to adjust its position in space, and **in that** the optician guides the individual and controls the processor to trigger the acquisition of images and the processing of said images.

11. Method according to any one of Claims 1 to 10, **characterized in that** the result of the measurements is displayed on the screen (8).

12. Method according to any one of Claims 1 to 11, **characterized in that** it comprises a step of monitoring the distance between the image acquisition system (7) and the face of the individual, in such a way as to ensure that this distance is within an acceptable range.

13. Information-processing device for implementing a method according to any one of Claims 1 to 12, **characterized in that** it comprises a processor, a target (12), at least one camera (7) equipped with an inclinometer, a display screen (8) for viewing the pictures taken by said camera (7) and also the result of the measurements, **characterized in that** said screen (8) displays a chart (11) represented by a rectangle of constant size, the adjustment of the images being satisfactory when the frame (10) and the eyes of the individual are inscribed within this reference chart (11).

14. Device according to Claim 13, **characterized in that** the position of the camera (7) and the position of the screen (8) can be adjusted independently of each other.

**15.** Device according to either of Claims 13 and 14, **characterized in that** it is formed by a tablet (1) combining the screen (8), a secondary camera, the inclinometer and the processor, and by said at least one camera (7).

EP 2 761 366 B1

**Fig. 1**

**Fig. 2**

**Fig. 3**

RECULEZ

13

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010195045 A
- WO 2008129168 A1
- US 2008309772 A1